(19) Europäisches Patentamt
European Patent Office
Office européen des brevets

(11) **EP 2 839 227 B1**

(12) **FASCICULE DE BREVET EUROPEEN**

(45) Date de publication et mention de la délivrance du brevet:
**27.04.2016 Bulletin 2016/17**

(21) Numéro de dépôt: **13710506.0**

(22) Date de dépôt: **22.02.2013**

(51) Int Cl.:
*F25D 11/00* (2006.01)    *F25D 29/00* (2006.01)
*F25D 3/10* (2006.01)    *B60H 1/32* (2006.01)

(86) Numéro de dépôt international:
**PCT/FR2013/050366**

(87) Numéro de publication internationale:
**WO 2013/156696 (24.10.2013 Gazette 2013/43)**

(54) **MÉTHODE DE RÉGULATION DE LA TEMPÉRATURE DE LA CHAMBRE DE STOCKAGE DES PRODUITS D'UN VÉHICULE DE TRANSPORT DE PRODUITS THERMOSENSIBLES FONCTIONNANT EN INJECTION INDIRECTE**

VERFAHREN ZUR REGELUNG DER TEMPERATUR DER PRODUKTLAGERKAMMER EINES INDIREKT-INJEKTIONSFAHRZEUGS ZUM TRANSPORT VON WÄRMEEMPFINDLICHEN PRODUKTEN

METHOD FOR REGULATING THE TEMPERATURE OF THE STORAGE CHAMBER FOR PRODUCTS OF AN INDIRECT INJECTION VEHICLE TRANSPORTING HEAT-SENSITIVE PRODUCTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.04.2012 FR 1253546**

(43) Date de publication de la demande:
**25.02.2015 Bulletin 2015/09**

(73) Titulaire: **L'Air Liquide Société Anonyme pour l'Etude et l'Exploitation des Procédés Georges Claude 75007 Paris (FR)**

(72) Inventeurs:
• **YOUBI-IDRISSI, Mohammed**
**F-91300 Massy (FR)**
• **CLEMENT, Cécile**
**91400 Saclay (FR)**
• **DALLAIS, Antony**
**91640 Janvry (FR)**

(74) Mandataire: **Mellul-Bendelac, Sylvie Lisette L'Air Liquide Direction des Services De la Propriété Intellectuelle 75, Quai d'Orsay 75321 Paris Cedex 07 (FR)**

(56) Documents cités:
**EP-A2- 0 599 625       WO-A1-2010/128233**
**US-A1- 2003 019 219**

**Description**

La présente invention concerne le domaine du transport et de la distribution de produits thermosensibles, tels les produits pharmaceutiques et les denrées alimentaires. Dans ce domaine, le froid nécessaire au maintien en température des produits est fourni principalement par deux technologies différentes :

- les groupes frigorifiques à compression mécanique de vapeur fonctionnant en boucle fermée ;
- les groupes cryogéniques fonctionnant en boucle ouverte et mettant en oeuvre une injection directe ou indirecte de fluides cryogéniques dans l'espace comportant les produits.

Le document EP 0 599 625 A2 divulgue un procédé de transport de produits thermosensibles selon le préambules de la revendication 1.

La présente invention s'intéresse plus particulièrement aux solutions cryogéniques à injection indirecte. Dans de telles solutions, le fluide cryogénique (les plus utilisés sont l'azote liquide et le $CO_2$ liquide) est acheminé depuis un réservoir cryogénique embarqué, le plus souvent sous le camion frigorifique, jusqu'à un ou plusieurs échangeurs thermiques situés à l'intérieur de la ou les chambres froides du camion, échangeurs munis de moyens de circulation d'air. Ces échangeurs permettent le refroidissement de l'air interne à la chambre stockant les produits, air environnant les échangeurs, à la température désirée.

La chaleur extraite de l'air permet, tout d'abord, une évaporation complète du fluide cryogénique circulant dans l'échangeur, puis une élévation de sa température jusqu'à une température proche de celle de l'enceinte. Le fluide cryogénique en sortie d'échangeur est alors rejeté à l'extérieur après avoir cédé un maximum d'énergie de refroidissement.

De façon bien connue de l'homme du métier, des solutions existent aujourd'hui pour contrôler la température de l'air interne à la caisse stockant les produits transportés, principalement selon des algorithmes de commande de l'ouverture/fermeture des vannes d'alimentation des échangeurs en cryogène.

Cependant, suivant les échangeurs utilisés, les échanges thermiques ne sont pas optimisés, tout particulièrement pendant la phase transitoire pendant laquelle la chambre n'a pas atteint encore sa température de consigne (descente ou montée en température) : une surface d'échange insuffisante, un débit du cryogène bridé, une mauvaise distribution du débit du cryogène dans les différents modules des échangeurs utilisés ou encore une mauvaise distribution du côté air peuvent être à l'origine de tels défauts de performance des échangeurs pendant cette phase.

Il peut en résulter les observations suivantes :

- La puissance obtenue par les échangeurs est parfois insuffisante pour atteindre des températures négatives ;
- Le temps de descente en température est trop long.

Rappelons que le contrôle de procédé typiquement mis en oeuvre dans de tels camions fonctionnant en injection indirecte est le suivant :

1- lors de la mise en route du système frigorifique du camion (par exemple au démarrage d'une tournée ou après un arrêt prolongé du système frigorifique pour une raison quelconque) ou encore après une ouverture de porte, on adopte un mode de descente rapide en température (cette industrie nomme cette phase « pull down »).

2- Une fois la température de consigne atteinte dans la chambre de stockage des produits, on adopte un mode de contrôle/régulation qui permet de maintenir la température de la chambre de stockage des produits à la valeur de la consigne (« maintien »).

Les professionnels de ce secteur parlent également d'un fonctionnement en pleine charge (phase 1) ou à charge partielle (phase 2).

Et précisément on peut penser qu'une des raisons pour lesquelles les échanges thermiques ne sont pas optimisés est liée au contrôle de l'injection du cryogène durant la phase de « descente rapide », où les algorithmes de contrôle utilisés actuellement imposent un écart fixe de température entre l'air de l'enceinte à refroidir et la température des vapeurs du cryogène en sortie d'échangeur. La valeur de cet écart est déterminée afin :

- d'assurer le fonctionnement du système dans des configurations variables : volume à refroidir et température de consigne variables, phase de descente rapide, phase de maintien, ...;
- d'optimiser le système pendant son fonctionnement en régime stationnaire (maintien).

Par conséquent, en fixant par la régulation cet écart de température entre l'air de l'enceinte à refroidir et la température du cryogène en sortie d'échangeur (on appelle couramment cet écart le «pincement» de l'échangeur) on assiste au fait que la puissance est limitée pendant la phase critique de descente rapide, alors que c'est durant cette phase que le système aurait besoin de davantage de puissance frigorifique pour accélérer la descente en température.

Explicitons davantage les modes de régulation actuellement pratiqués. Au début de la phase de descente rapide, la température de l'air dans l'enceinte (on parle aussi de « caisse » ou de « chambre ») à refroidir est très supérieure à la température de consigne. A titre d'exemple des consignes traditionnellement pratiquées dans cette industrie du transport, on peut citer l'exemple d'une consigne de 0 à 4°C pour du transport de produits frais, tandis que l'on rencontre des consignes de -20 °C pour du transport de produits congelés, ces deux consignes pouvant être implémentées dans deux chambres voisines d'un même camion. Les vannes réglant l'injection du cryogène s'ouvrent alors complètement et demeurent ouvertes pour permettre un échange thermique entre les parois froides de l'échangeur thermique où circule le cryogène et l'air environnant, air qui voit sa température diminuer au fur et à mesure jusqu'à ce qu'elle soit proche de la température de consigne. A ce moment, une régulation des vannes commence à s'exercer pour imposer des durées de fermeture plus ou moins longues afin de faire « atterrir » doucement la température de l'air interne à l'enceinte au voisinage de la température de consigne, et de maintenir cette température pendant le reste du temps.

Mais comme signalé plus haut, actuellement, ce contrôle est réalisé de façon à maintenir le « pincement » à une valeur fixe, préférentiellement dans la plage de 5 à 20K et ceci quelle que soit la phase du fonctionnement du système (descente rapide ou maintien).

Or, en phase de descente rapide, la puissance requise est, comme on l'a déjà signalé plus haut, plus importante et nécessiterait d'avoir une température du fluide la plus basse possible pour délivrer plus de puissance à l'air interne à la chambre.

La présente invention a alors notamment pour objectif de proposer un nouveau contrôle de procédé régissant le fonctionnement de tels transports à injection indirecte, pour permettre au système de fonctionner d'une manière optimale pendant toutes les phases de fonctionnement.

Comme on le verra plus en détails dans ce qui suit, la présente invention propose notamment une solution pour réguler la température de la chambre froide en optimisant les échanges thermiques et en améliorant la performance des échangeurs, notamment en augmentant la puissance frigorifique fournie pendant la phase de descente rapide.

Pour cela, la présente invention propose la prise en compte d'un paramètre permettant la régulation du pincement de l'échangeur, paramètre qui est variable suivant la température atteinte par l'air de l'enceinte à refroidir. L'objectif est donc d'avoir un écart important entre la température de sortie du cryogène et la température de l'air interne à la chambre, tant que cette dernière n'est pas proche de sa température de consigne. Ainsi, on favorise une alimentation plus importante de l'échangeur en fluide cryogénique et par conséquent une puissance délivrée bien plus élevée.

Lorsque la température de l'air s'approche de la température de consigne, la demande en énergie est moins importante car le volume d'air et les parois du camion ont été refroidis et leur inertie thermique a été en grande partie vaincue à cette phase de fonctionnement, et l'on peut alors se permettre de maintenir une température de sortie du cryogène plus élevée et donc un écart (pincement) entre les températures de l'air intérieur à la chambre et de sortie du cryogène qui peut être réduit.

La présente invention concerne alors un procédé de transport de produits thermosensibles en camion réfrigéré selon la revendication 1.

Selon un mode préféré de mise en oeuvre de l'invention, la ou chacune des vannes alimentant en cryogène le système d'échangeur sont de type « TOR » (Tout ou Rien) et la régulation selon l'invention ordonne alors l'ouverture totale de cette ou ces vannes tant que le Pincement est inférieur ou égal au paramètre P.

Mais il est également possible, sans sortir à aucun moment du cadre de la présente invention, de mettre en oeuvre d'autres types de vannes et notamment des vannes proportionnelles dont les possibilités d'actions sont bien évidemment plus nombreuses, auquel cas la régulation selon l'invention ordonne alors, selon l'algorithme utilisé, tant que le Pincement est inférieur ou égal au paramètre P, l'ouverture large ou totale de cette ou ces vannes ou l'augmentation de leur ouverture selon le moment considéré au sein de cette phase.

Conformément à l'invention, quand le Pincement est supérieur au paramètre P, l'unité de gestion et de commande ordonne la fermeture de la ou des vannes alimentant le système d'échangeur, ou la diminution de leur ouverture selon le moment considéré au sein de cette phase et ici encore selon l'algorithme choisi pour régir le fonctionnement de la régulation :

- selon un mode préféré de mise en oeuvre de l'invention la ou chacune des vannes alimentant en cryogène le système d'échangeur sont de type « TOR » et la régulation selon l'invention ordonne alors la fermeture totale de cette ou ces vannes lorsque le Pincement passe au dessus du paramètre P.

- mais selon un autre mode de mise en oeuvre de l'invention, la ou chaque vanne alimentant le système d'échangeur sont des vannes proportionnelles, et la régulation selon l'invention ordonne alors, selon l'algorithme utilisé, quand le Pincement passe au dessus du paramètre P, la fermeture partielle, ou totale, ou la réduction de l'ouverture de cette ou ces vannes selon le moment considéré au sein de cette phase.

On l'aura donc compris à la lecture de ce qui précède, la démarche de la régulation selon la présente invention est de ne pas fixer le Pincement = $T_{int}$ - $T_{sortie\ fluide}$ mais au contraire de le faire varier selon la valeur de $\Delta T$, i.e selon la position de la température intérieure à la chambre par rapport à une consigne, donc selon le besoin de frigories nécessaires à la phase de vie du transport considérée (phase de descente rapide, phase de maintien).

Cette démarche a conduit la Demanderesse à proposer et tester différentes équations de prise en compte de $\Delta T$, au travers de différentes expressions d'un paramètre P s'exprimant en fonction de $\Delta T$.

On illustre ci-dessous trois paramètres P différents, i.e trois fonctions différentes de $\Delta T$ :

$$P = a \ln(1 + abs(\Delta T) + b \quad (Equation\ 1)$$

$$P = a \ln(1 + abs(\Delta T)) + (b \times Tcons + c) \times abs(\Delta T) + d \quad (Equation\ 2)$$

$$P = \left(a \times abs(\Delta T) + b\right) \times e^{\frac{-1}{1 + abs(\Delta T)^2}} + (c \times abs(\Delta T) + d) \times e^{-abs(\Delta T)} \quad (Equation\ 3)$$

où « ln » est la fonction du logarithme népérien, « abs » est la fonction valeur absolue, et « e » la fonction exponentielle.

Comme il apparaitra clairement à l'homme du métier, d'autres fonctions pourraient être proposées mais il s'agit ici pour la Demanderesse d'illustrer la démarche de l'invention et sa bonne mise en oeuvre par des exemples, le mérite de la présente invention et son apport étant d'avoir proposé de réguler en fonction d'un paramètre P s'exprimant en fonction de $\Delta T$.

Comme on va l'illustrer ci-dessous, les expérimentations réalisées ont montré que la régulation selon l'équation 3 est celle qui offre la performance optimale de l'échangeur.

Et l'on notera que l'on a testé cette équation 3 avec des facteurs a, b, c, et d ayant des valeurs dans les gammes suivantes :

-- > **a** = -0,5 à -0,005
-- > **b** = 0 à 100
-- > **c** = 0 à 20
-- > **d** = 0 à 20

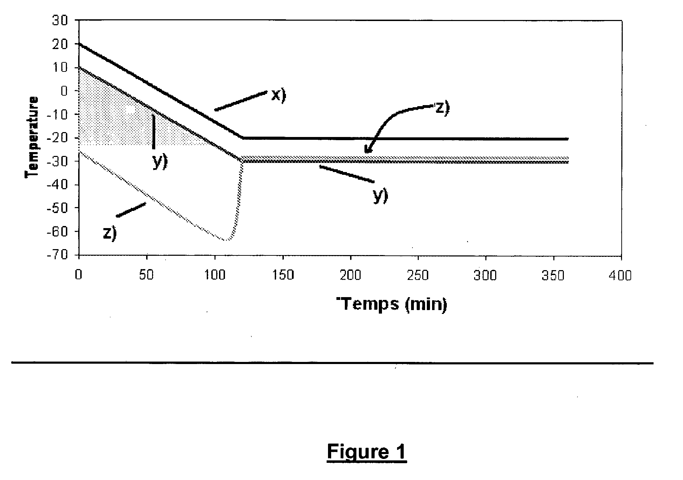

Et les figures 1, 2 et 3 annexées permettent de bien comprendre les gains obtenus par une telle régulation selon l'équation 3 :

- la figure 1 représente l'évolution de la température interne à la chambre $T_{int}$ (courbe x)) et de la température de sortie d'échangeur $T_{sortie}$ selon l'art antérieur (régulations actuellement pratiquées : pincement fixe = courbe y)) et selon l'invention (pincement variable, courbe z)).

Selon des modes préférés de mise en oeuvre de l'invention, on privilégie:

- un pincement important (plusieurs dizaines de degrés de différence) par exemple à 50K dans les conditions du surgelé et 30K dans les conditions du frais, pendant la majeure partie du « pull down » (descente rapide) ;
- un pincement qui se réduit brusquement quand la température interne est à quelques degrés de la consigne, préférentiellement inférieur à 2K;
- un pincement est maintenu constant quand la température interne atteint sa température de consigne.
- la figure 2 représente les deux courbes de descente en température obtenues dans la chambre, selon les régulations actuellement pratiquées (courbe m)) et selon l'invention (courbe n)).
- la figure 3 représente les deux courbes de puissance apportée (en W) en fonction du temps, selon les régulations actuellement pratiquées (courbe o)) et selon l'invention (courbe p)), la partie hachurée matérialise la différence de puissance apportée selon l'invention, tout particulièrement durant les premiers temps de la descente rapide.

On visualise alors bien la démarche de l'invention de mettre en place un pincement plus important durant la descente rapide (figure 1) et le bilan très positif d'une telle démarche :

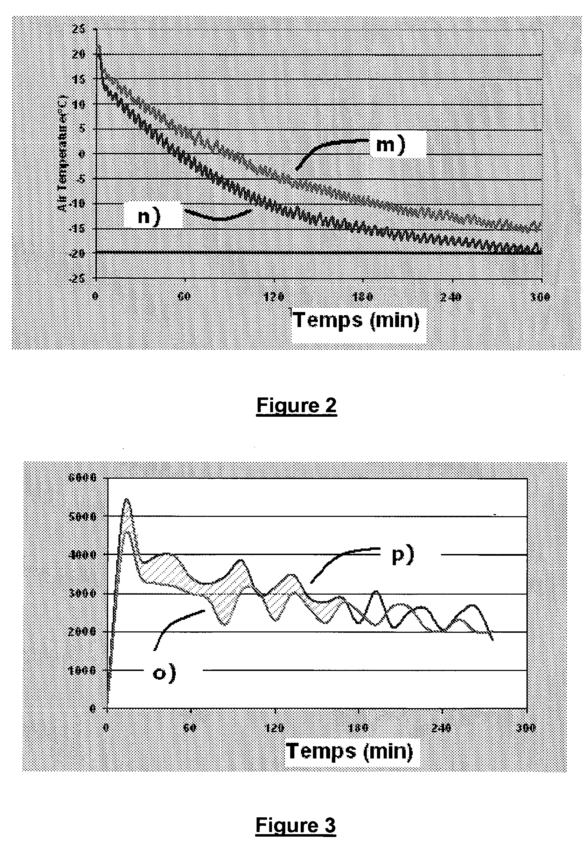

- avec un temps de descente en température plus rapide grâce à l'invention (figure 2) : on constate environ 30% de réduction du temps de descente en température (qu'il s'agisse des températures voisines de 4°C pour les produits frais, ou des températures négatives pour les produits congelés) ;

- ce que l'on explique sans ambiguïté par la différence de puissance transférée au système grâce à l'invention (partie hachurée sur la figure 3), on transfert à tout le moins 25 % de puissance supplémentaire durant la phase de descente rapide.

- cette régulation permet par ailleurs d'économiser du cryogène, notamment dans la phase de descente rapide étant donné que cette dernière dure moins longtemps grâce à la présente invention. Les expérimentations réalisées par la Demanderesse ont permis d'autre part de montrer que grâce à la présente régulation on enregistre une baisse de consommation pour les scénarii de transport frigorifique pour lesquels la durée totale de la tournée (descente rapide et maintien) n'excède pas 6 à 8 heures.

Comme il apparaitra également clairement à l'homme du métier, l'invention telle qu'elle vient d'être décrite s'applique au cas d'une chambre unique au sein d'un camion mais également au cas de plusieurs chambres de stockage de produits au sein d'un camion, et l'invention permet alors de réguler la température au sein de chacune des chambres, chacune des chambres étant équipée d'un système d'échangeur, chacune des chambres devant respecter sa propre consigne interne $T_{cons}$ selon les produits qu'elle doit stocker, le système de commande mesurant en temps réel la température interne à chaque chambre $T_{int}$, celle des vapeurs froides sortant de tout ou partie des échangeurs du système d'échangeur de chaque chambre ($T_{sortie\ fluide}$), le Pincement associé à chaque chambre etc....

## Revendications

1. Procédé de transport de produits thermosensibles en camion réfrigéré, du type où le camion est muni :

   - d'au moins une chambre de stockage des produits,
   - d'une réserve d'un fluide cryogénique tel l'azote liquide,
   - d'un système d'échangeur thermique interne à ladite au moins une chambre, dans lequel circule le fluide cryogénique,
   - d'un système de circulation d'air, par exemple de type ventilateurs, apte à mettre en contact l'air interne à la chambre avec les parois froides du système d'échangeur thermique,
   - de capteurs de température aptes à déterminer la température de l'atmosphère interne à ladite au moins une chambre ($T_{int}$) d'une part et celle des vapeurs froides sortant de tout ou partie des échangeurs du système d'autre part ($T_{sortie\ fluide}$),
   - ainsi que d'une unité de gestion et de commande, apte à réguler la température interne $T_{int}$ à une valeur de consigne $T_{cons}$ en ordonnant une fermeture ou ouverture, ou le degré de telles ouverture/fermeture, d'une ou de vannes alimentant en fluide cryogénique le système d'échangeur, on détermine en temps réel la grandeur

$$\Delta T = T_{int} - T_{cons} ;$$

   **se caractérisant en ce que** l'on régule la température $T_{int}$ par la mise en oeuvre des mesures suivantes :

   - on détermine en temps réel la valeur du Pincement du système d'échangeur où :

$$Pincement = T_{int} - T_{sortie\ fluide} ;$$

   - on prend en compte un paramètre P qui est une fonction de $\Delta T$, et l'unité de gestion et de commande ordonne, tant que le Pincement est inférieur ou égal au paramètre P, le maintien en position ouverte ou l'augmentation de l'ouverture de la ou des vannes utilisées pour alimenter en fluide cryogénique le système d'échangeur.

2. Procédé de transport de produits thermosensibles en camion réfrigéré selon la revendication 1, **se caractérisant en ce que** quand le Pincement passe au dessus du paramètre P, l'unité de gestion et de commande ordonne la fermeture partielle, ou totale, ou la réduction de l'ouverture de cette ou ces vannes selon le moment considéré au sein de cette phase et en fonction de l'algorithme choisi pour régir cette régulation.

3. Procédé de transport de produits thermosensibles en camion réfrigéré selon la revendication 1, **se caractérisant en ce que** la ou chacune des vannes alimentant en cryogène le système d'échangeur sont de type « TOR » et l'unité de gestion et de commande ordonne alors l'ouverture totale de cette ou ces vannes tant que le Pincement est inférieur ou égal au paramètre P.

4. Procédé de transport de produits thermosensibles en camion réfrigéré selon la revendication 1, **se caractérisant en ce que** la ou chacune des vannes alimentant en cryogène le système d'échangeur sont de type vannes proportionnelles, et l'unité de gestion et de commande ordonne alors, selon l'algorithme utilisé, tant que le Pincement est inférieur ou égal au paramètre P, l'ouverture large ou totale de cette ou ces vannes ou l'augmentation de leur ouverture selon le moment considéré au sein de cette phase.

5. Procédé de transport de produits thermosensibles en camion réfrigéré selon la revendication 2, **se caractérisant en ce que** la ou chacune des vannes alimentant en cryogène le système d'échangeur sont de type « TOR » et l'unité de gestion et de commande ordonne alors la fermeture totale de cette ou ces vannes lorsque le Pincement passe au dessus du paramètre P.

6. Procédé de transport de produits thermosensibles en camion réfrigéré selon la revendication 2, **se caractérisant en ce que** la ou chacune des vannes alimentant en cryogène le système d'échangeur sont de type vannes proportionnelles, et l'unité de gestion et de commande ordonne alors quand le Pincement passe au dessus du paramètre P, la fermeture partielle, ou totale, ou la réduction de l'ouverture de cette ou ces vannes selon le moment considéré au sein de cette phase et en fonction de l'algorithme choisi pour régir cette régulation.

7. Procédé selon l'une des revendications précédentes, **se caractérisant en ce que** le paramètre P s'exprime en fonction de $\Delta T$ selon une formulation de type :

$$P = a \ln(1 + abs(\Delta T) + b \quad (Equation\ 1)$$

où « ln » est la fonction du logarithme népérien, « abs » est la fonction valeur absolue, et a, b sont des facteurs ayant des valeurs dans les gammes suivantes: $-0.5 \le a \le -0.005$ et $0 \le b \le 100$.

8. Procédé selon l'une des revendications précédentes, **se caractérisant en ce que** le paramètre P s'exprime en fonction de $\Delta T$ selon une formulation de type :

$$P = a \ln(1 + abs(\Delta T)) + (b \times T_{cons} + c) \times abs(\Delta T) + d \quad (Equation\ 2)$$

où « ln » est la fonction du logarithme népérien, « abs » est la fonction valeur absolue, et a,b,c sont des facteurs ayant des valeurs dans les gammes suivantes :

$$-0.5 \le a \le -0.005, \quad 0 \le b \le 100 \quad et \quad 0 \le c \le 20.$$

9. Procédé selon l'une des revendications précédentes, **se caractérisant en ce que** le paramètre P s'exprime en fonction de $\Delta T$ selon une formulation de type :

$$P = (a \times abs(\Delta T) + b) \times e^{\frac{-1}{1+abs(\Delta T)^2}} + (c \times abs(\Delta T) + d) \times e^{-abs(\Delta T)} \quad (Equation\ 3)$$

où « abs » est la fonction valeur absolue, « e » la fonction exponentielle, et a, b, c, d sont des facteurs ayant des valeurs dans les gammes suivantes :

$$-0.5 \leq a \leq -0.005, \quad 0 \leq b \leq 100,$$
$$0 \leq c \leq 20 \text{ et } 0 \leq d \leq 20.$$

**Patentansprüche**

1.  Verfahren zum Befördern von wärmeempfindlichen Produkten im Kühl-LKW, in der Art, dass der LKW folgendermaßen ausgestattet ist:

    - mit zumindest einer Kammer zum Lagern der Produkte,
    - mit einem Speicher für ein kryogenes Fluid, wie flüssigem Stickstoff,
    - ein Wärmetauschersystem innerhalb der besagten zumindest einen Kammer, in dem das kryogene Fluid zirkuliert,
    - mit einem Luftzirkulationssystem, beispielsweise in der Art von Lüftern, die imstande sind, die Luft innerhalb der Kammer mit den kalten Wänden des Wärmetauschersystems in Kontakt zu bringen,
    - mit Temperatursensoren, die imstande sind, die Temperatur der Innenatmosphäre in der zumindest einen Kammer ($T_{int}$) einerseits und jene der kalten Dämpfe zu bestimmen, die allen oder aus einem Teil der Tauscher des Systems andererseits ($T_{sortie\ fluide}$) austreten,
    - sowie mit einer Verwaltungs- und Steuereinheit, die imstande ist, die interne Temperatur $T_{int}$ auf einen Sollwert $T_{cons}$ einzustellen, indem sie den Befehl zum Schließen oder Öffnen oder für den Grad solcher Schließungen/ Öffnungen eines oder mehrerer Ventile ausgibt, die das Wärmetauschersystem mit dem kryogenen Fluid versorgen, wobei man in Echtzeit die Größe von $\Delta T = T_{int} - T_{cons}$ bestimmt;
    **dadurch gekennzeichnet, dass** man die Temperatur $T_{int}$ durch die Anwendung der folgenden Maßnahmen regelt:
    - man bestimmt in Echtzeit den Wert für den Spalt des Wärmetauschersystems bestimmt, wobei:

    $$\text{Spalt} = T_{int} - T_{sortie\ fluide};$$

    - man einen von $\Delta T$ abhängigen Parameter P berücksichtigt, und
    die Verwaltungs- und Steuereinheit, solange der Spalt kleiner oder gleich dem Parameter P ist, die Beibehaltung in der offenen Position oder die Vergrößerung der Öffnung des oder der Ventile befiehlt, die zur Versorgung des Wärmetauschersystems mit dem kryogenen Fluid verwendet werden.

2.  Verfahren zum Befördern von wärmeempfindlichen Produkten im Kühl-LKW nach Anspruch 1, **dadurch gekennzeichnet, dass** die Verwaltungs- und Steuereinheit, sobald der Spalt größer wird, als der Parameter P, je nach angenommenem Moment innerhalb dieser Phase und in Abhängigkeit vom ausgewählten Algorithmus zum Bestimmen dieser Regelung, die teilweise oder vollkommene Schließung oder die Verringerung der Öffnung dieses oder dieser Ventile befiehlt.

3.  Verfahren zum Befördern von wärmeempfindlichen Produkten im Kühl-LKW nach Anspruch 1, **dadurch gekennzeichnet, dass** das oder jedes der Ventile, die das Wärmetauschersystems mit dem kryogenen Fluid versorgen, vom Typ "AON" sind, und die Verwaltungs- und Steuereinheit somit die vollständige Öffnung dieses oder dieser Ventile befiehlt, solange der Spalt kleiner oder gleich dem Parameter P ist.

4.  Verfahren zum Befördern von wärmeempfindlichen Produkten im Kühl-LKW nach Anspruch 1, **dadurch gekennzeichnet, dass** das oder jedes der Ventile, die das Wärmetauschersystems mit dem kryogenen Fluid versorgen, vom Typ Proportionalventil sind, und die Verwaltungs- und Steuereinheit somit je nach verwendetem Algorithmus, die große oder vollständige Öffnung dieses oder dieser Ventile oder die Vergrößerung ihrer Öffnung je nach angenommenem Moment innerhalb dieser Phase befiehlt, solange der Spalt kleiner oder gleich dem Parameter P ist.

5. Verfahren zum Befördern von wärmeempfindlichen Produkten im Kühl-LKW nach Anspruch 2, **dadurch gekennzeichnet, dass** das oder jedes der Ventile, die das Wärmetauschersystems mit dem kryogenen Fluid versorgen, vom Typ "AON" sind, und die Verwaltungs- und Steuereinheit somit die vollständige Schließung dieses oder dieser Ventile befiehlt, wenn der Spalt größer wird, als der Parameter P.

6. Verfahren zum Befördern von wärmeempfindlichen Produkten im Kühl-LKW nach Anspruch 2, **dadurch gekennzeichnet, dass** das oder jedes der Ventile, die das Wärmetauschersystems mit dem kryogenen Fluid versorgen, vom Typ Proportionalventil sind, und die Verwaltungs- und Steuereinheit somit die teilweise oder vollständige Schließung oder die Verringerung der Öffnung dieses oder dieser Ventile je nach angenommenem Moment innerhalb dieser Phase und je nach verwendetem Algorithmus befiehlt, wenn der Spalt größer wird, als der Parameter P.

7. Verfahren nach einem der vorherigen Ansprüche, **dadurch gekennzeichnet, dass** der Parameter P je nach ΔT gemäß der folgenden Formel ausgedrückt wird:

$$P = a\ ln(1+abs(\Delta T)+b\ \text{(Gleichung 1)}$$

wobei "ln" die Funktion des natürlichen Logarithmus ist, "abs" die Funktion eines absoluten Werts ist, und a, b Faktoren sind, die Werte in den folgenden Bereichen aufweisen:

$$-0,5 \leq a \leq -0,005\ \text{und}\ 0 \leq b \leq 100.$$

8. Verfahren nach einem der vorherigen Ansprüche, **dadurch gekennzeichnet, dass** der Parameter P je nach ΔT gemäß der folgenden Formel ausgedrückt wird:

$$P = a\ ln(1+abs(\Delta T))+(b \times T_{cons} + c)\ x\ abs(\Delta T) + d$$

$$\text{(Gleichung 2)}$$

wobei "ln" die Funktion des natürlichen Logarithmus ist, "abs" die Funktion eines absoluten Werts ist, und a, b, c Faktoren sind, die Werte in den folgenden Bereichen aufweisen:

$$-0,5 \leq a \leq -0,005,\ 0 \leq b \leq 100\ \text{und}\ 0 \leq c \leq 20.$$

9. Verfahren nach einem der vorherigen Ansprüche, **dadurch gekennzeichnet, dass** der Parameter P je nach ΔT gemäß der folgenden Formel ausgedrückt wird:

$$P = (a\ x\ abs(\Delta T) + b)\ x\ e^{\frac{-1}{1+abs(\Delta T)2}} + (c\ x\ abs(\Delta T) + d)\ x\ e^{-abs(\Delta T)}\ (Gleichung\ 3)$$

*wobei* "abs" die Funktion absoluter Wert ist, und a, b, c, d Faktoren sind, die Werte in den folgenden Bereichen aufweisen:

$$-0,5 \leq a \leq -0,005,\ 0 \leq b \leq 100,\ 0 \leq c \leq 20\ \text{und}\ 0 \leq d \leq 20.$$

**Claims**

1. Method for transporting heat-sensitive products in a refrigerated lorry, of the type where the lorry is provided with:

   - at least one storage chamber for products,
   - a reserve of a cryogenic fluid such as liquid nitrogen,
   - a heat exchanger system internal to said at least one chamber, wherein flows the cryogenic fluid,
   - an air circulation system, for example of the fan type, able to place the air inside the chamber in contact with the cold walls of the heat exchanger system,
   - temperature sensors able to determine the temperature of the atmosphere internal to said at least one chamber ($T_{int}$) on the one hand and that of the cold vapours exiting from all or a portion of the exchangers of the system on the other hand ($T_{fluid\ outflow}$),
   - as well as a management and control unit, able to regulate the internal temperature $T_{int}$ at a set value $T_{cons}$ by ordering a closing or opening, or the degree of such an opening/closing, of a valve or valves supplying the exchanger system with cryogenic fluid, the magnitude $\Delta T = T_{int} - T_{cons}$ is determined in real time; **characterised in that** the temperature $T_{int}$ is regulated by implementing the following measurements:

      - the value of the Pinch of the exchanger system is determined in real time where:

$$\text{Pinch} = T_{int} - T_{fluid\ outflow};$$

      - a parameter P is taken into account which is a function of $\Delta T$, and the management and control unit orders, as long as the Pinch is less than or equal to the parameter P, the maintaining in open position or the increase of the opening of the valve or of the valves used to supply the exchanger system with cryogenic fluid.

2. Method for transporting heat-sensitive products in a refrigerated lorry according to claim 1, **characterised in that** when the Pinch passes above the parameter P, the management and control unit orders the partial, or total, closing, or the reduction in the opening of this or these valves according to the moment under consideration within this phase and according to the algorithm chosen to govern this regulation.

3. Method for transporting heat-sensitive products in a refrigerated lorry according to claim 1, **characterised in that** the or each of the valves supplying the exchanger system with cryogen are of the "All or Nothing" type and the management and control unit then orders the full opening of this or these valves as long as the Pinch is less than or equal to the parameter P.

4. Method for transporting heat-sensitive products in a refrigerated lorry according to claim 1, **characterised in that** the or each of the valves supplying the exchanger system with cryogen are of the proportional valve type, and the management and control unit then orders, according to the algorithm used, as long as the Pinch is less than or equal to the parameter P, the wide or full opening of this or these valves or the increase in their opening according to the moment under consideration within this phase.

5. Method for transporting heat-sensitive products in a refrigerated lorry according to claim 2, **characterised in that** the or each of the valves supplying the exchanger system with cryogen are of the "All or Nothing" type and the management and control unit then orders the full closing of this or these valves when the Pinch passes above the parameter P.

6. Method for transporting heat-sensitive products in a refrigerated lorry according to claim 2, **characterised in that** the or each of the valves supplying the exchanger system with cryogen are of the proportional valve type, and the management and control unit then orders when the Pinch passes above the parameter P, the partial, or total, closing, or the reduction in the opening of this or these valves according to the moment under consideration within this phase and according to the algorithm chosen to govern this regulation.

7. Method according to one of the preceding claims, **characterised in that** the parameter P is expressed as a function of $\Delta T$ according to a formulation of the type:

$$P = a\ln(1 + abs(\Delta T) + b \quad (Equation \ 1)$$

where "ln" is the function of the natural logarithm, "abs" is the absolute value function, and a, b are factors having values in the following ranges:

$$-0.5 \le a \le -0.005 \ and \ 0 \le b \le 100.$$

8. Method according to one of the preceding claims, **characterised in that** the parameter P is expressed as a function of $\Delta T$ according to a formulation of the type:

$$P = a\ln(1 + abs(\Delta T)) + (b \times T_{cons} + c) \times abs(\Delta T) + d \quad (Equation \ 2)$$

where "ln" is the function of the natural logarithm, "abs" is the absolute value function, and a, b, c are factors having values in the following ranges:

$$-0.5 \le a \le -0.005, \ 0 \le b \le 100 \ and \ 0 \le c \le 20.$$

9. Method according to one of the preceding claims, **characterised in that** the parameter P is expressed as a function of $\Delta T$ according to a formulation of the type:

$$P = \left(a \times abs(\Delta T) + b\right) \times e^{\frac{-1}{1 + abs(\Delta T)^2}} + (c \times abs(\Delta T) + d) \times e^{-abs(\Delta T)} \quad (Equation \ 3)$$

where "abs" is the absolute value function, "e" the exponential function, and a, b, c, d are factors having values in the following ranges:

$$-0.5 \le a \le -0.005, \ 0 \le b \le 100, \ 0 \le c \le 20 \ and \ 0 \le d \le$$
$$20.$$

**Figure 1**

**Figure 2**

**Figure 3**

**EP 2 839 227 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0599625 A2